# EUROPEAN PATENT SPECIFICATION

(11) **EP 0 679 676 B1**
(45) Date of publication and mention of the grant of the patent: **29.12.1999**
(21) Application number: 95106494.8
(22) Date of filing: 28.04.1995
(51) Int. Cl.: C08G 77/50

(54) **Method for manufacturing an organosilicon polymer with double-ended functionality**
Verfahren zur Herstellung eines Organosiliconcopolymeren mit zwei endständigen funktionellen Gruppen
Procédé de préparation de polymères organosiliciques, ayant un groupe fonctionnel aux deux extrémités de la chaîne

(30) Priority: 28.04.1994 JP 11395294
(43) Date of publication of application: 02.11.1995
(73) Proprietor: Dow Corning Toray Silicone Company, Limited, Tokyo 103 (JP)
(72) Inventor: Kobayashi, Hideki Dow Corning Toray, Ichihara-shi, Chiba Pref. (JP)
(74) Representative: Sternagel, Hans-Günther, Dr.

(56) References cited:
- DE-A- 3 144 627
- FR-A- 2 605 326

## Description

The present invention relates to a method for manufacturing an organosilicon polymer containing a silalkylenesiloxane, as the principal chain, with good yield and without accompanying depolymerization. This organosilicon polymer is characterized by possessing the same functionality at both ends.

When compared to dimethylpolysiloxane, organosilicon polymers containing a silalkylenesiloxane, as expressed by the general formula (-R₂Si-CₐH₂ₐ-R₂SiO-) where R is a monovalent hydrocarbon group and a is a positive integer, have resistance to scission of the molecular chain by an ionic material, such as acid or alkali. Thus, their utilization in specialized fields is being widely studied. Ring-opening polymerization (scission) methods, which use cyclic silalkylenesiloxanes as a starting material for manufacturing organosilicon polymers containing this silalkylenesiloxane group are known. This art is represented by: Izvestiya Akademii Nauk USSR, Seriy a Khimicheskaya, No. 4, 739-744, April, 1971; Japanese Kokai Patent Application 4-65428 (also U.S. Patent 5,087,720; and Japanese Kokai Patent Application 4-65429 (U.S. Patent 5,117,025).

However, these methods require a cyclic silalkylenesiloxane, such as 2,2,6,6-tetramethyl-1-oxa-2,6-disilacyclohexane and the like, as a starting material. These compounds are difficult to synthesize and are high cost. In addition, the method reported in Izvestiya Akademii Nauk has the drawback of not being able to produce a high yield of the desired organosilicon polymer because a part of the polysilalkylenesiloxane tends to depolymerize.

FR-A-2 605 326 discloses a process for preparing polymers containing silalkylenesiloxane units.

Along with these methods, there is a method for obtaining a silethylenesiloxane of low molecular weight and single-ended functionality from 1,1,3,3-tetramethyl-1-vinyldisiloxane and pentamethyldisiloxane DE-A 3,144,627). However, a silethylenesiloxane having the same functionality on both ends has not been previously offered.

We have solved the aforementioned problems through painstaking study.

Specifically, We offer a method for manufacturing, without depolymerization and with good yield, an organosilicon polymer containing a silalkylenesiloxane as the primary chain and having the same functionality on both ends.

Our invention provides a method for manufacturing an organosilicon polymer with double-ended functionality expressed by the general formula:

R³R¹ ₂SiO(R¹ ₂ SiO)ₚR¹ ₂Si{R⁴R¹ ₂SiO(R¹ ₂SiO)ₘSiR¹ ₂}ₙ R³

wherein R¹ is a C₁₋₁₀ monovalent hydrocarbon group that does not contain an aliphatic unsaturated bond, R⁴ is a C₂₋₁₀ alkylene group, R³ in the same molecule is either a hydrogen atom or a C₂₋₁₀ alkenyl group, p is an integer equal to or greater than 0, m is an integer equal to or greater than 0, and n is a positive integer, comprising: polymerizing by addition reaction
(A) a diorganosiloxane expressed by the general formula

   R²R¹ ₂SiO(R¹ ₂SiO)ₘSiR¹ ₂H

   wherein R¹ is a C₁₋₁₀ monovalent hydrocarbon group that does not contain any aliphatic unsaturated bonds, R² is a C₂₋₁₀ alkenyl group, and m is an integer equal to or greater than 0, and
(B) a diorganosiloxane expressed by the general formula

   R³R¹ ₂SiO(R¹ ₂SiO)ₚSiR¹ ₂R³

   wherein R¹ is a C₁₋₁₀ monovalent hydrocarbon group that does not contain any aliphatic unsaturated bonds, R³ in the same molecule is either only a hydrogen atom or only a C₂₋₁₀ alkenyl group, and p is an integer equal to or greater than 0, in the presence of
(C) a hydrosilylation catalyst

In the formula for component (A) of the present invention, R¹ is a monovalent C₁₋₁₀ hydrocarbon group that does not contain an aliphatic unsaturated bond. It includes, for example, an alkyl group such as methyl, ethyl, propyl, butyl, pentyl, hexyl, heptyl, octyl, nonyl, and decyl; an aryl group, such as phenyl, tolyl, and xylyl; or an aralkyl group, such as a benzyl or phenethyl. Methyl and phenyl are preferred. R² is a C₂₋₁₀ alkenyl group and includes vinyl, allyl, butenyl, pentenyl, hexenyl, heptenyl, octenyl, nonenyl, and decenyl, among which vinyl or allyl is preferable.

Also in the formula for component (A), m is an integer greater than or equal to 0. When m is 0, the compound is a 1,1,3,3-tetraorganodisiloxane. There is no particular upper limit to the value of m; however, when a-diorganosiloxane with a value of m exceeding 10 is used, it becomes difficult to separate component (A), which has not been completely reacted, from our organosilicon polymer with double-ended functionality. It is therefore preferable that m be an integer of 0-10.

The compounds shown in the following chemical formulae are examples of diorganosiloxanes suitable as component (A).
In these formulae, Me represents methyl, Et represents ethyl, and Ph represents phenyl.
(CH₂=CH)Me₂SiOSiMe₂H , (CH₂=CH)Et₂SiOSiEt₂H,
(CH₂=CH)MePhSiOSiMePhH , (CH₂=CHCH₂)Me₂SiOSiMe₂H ,
(CH₂=CHCH₂)Et₂SiOSiEt₂H,
(CH₂=CHCH₂CH₂CH₂CH₂)MePhSiOSiMePhH ,
(CH₂=CH)Me₂SiO(Me₂SiO)SiMe₂H,
(CH₂=CH)Et₂SiO(Et₂SiO)SiEt₂H,
(CH₂=CH)Me₂SiO(MePhSiO)SiMe₂H,
(CH₂=CH)Me₂SiO(Me₂SiO)₂SiMe₂H,
(CH₂=CH)Et₂SiO(Et₂SiO)₂SiEt₂H,
(CH₂=CH)Me₂SiO(MePhSiO)₂SiMe₂H,
(CH₂=CHCH₂)Me₂SiO(Me₂SiO)₂SiMe₂H,
(CH₂=CHCH₂)Et₂SiO(Et₂SiO)₂SiEt₂H , and
(CH₂=CHCH₂CH₂CH₂CH₂)Me₂SiO(MePhSiO)₂SiMe₂H.

The diorganopolysiloxanes of component (B) in our invention function to cap the end of the organosilicon polymer of component (A). Thus, We can control the degree of polymerization of an organosilicon polymer with double-ended functionality. In the formula of component (B), R¹ is the same as defined above for component (A). Methyl and phenyl are prefered R¹. R³ is hydrogen atom or a C₂₋₁₀ alkenyl group. Examples of alkenyl groups of R³ are vinyl, allyl, butenyl, pentenyl, hexenyl, heptenyl, octenyl, nonenyl, and decenyl, among which vinyl and allyl are preferred. R³ is preferably hydrogen atom, vinyl group, or allyl group. In component (B), R³ is the same at both ends of the molecule. For example, R³, at both terminals of a molecule of component (B), will be either a hydrogen atom or an alkenyl group.

In the formula for component (B), p is 0 or greater. If p is 0, component (B) is 1,1,3,3-tetraorganodisiloxane or 1,3-dialkenyltetraorganodisiloxane.

The compounds shown in the following chemical formulae exemplify diorganosiloxanes of component (B). In these compounds, Me represents methyl, Et represents ethyl, and Ph represents phenyl.
HMe₂SiOSiMe₂H , (CH₂=CH)Me₂SiOSiMe₂(CH=CH₂),
(CH₂=CHCH₂)Me₂SiOSiMe₂(CH₂CH=CH₂),
(CH₂=CHCH₂CH₂CH₂CH₂)Me₂SiOSiMe₂(CH₂CH₂CH₂CH₂CH=CH₂),
HEt₂SiOSiEt₂H , (CH₂=CH)Et₂SiOSiEt₂(CH=CH₂),
(CH₂=CHCH₂)MePhSiOSiPhMe(CH₂CH=CH₂),
HMe₂SiO(Me₂SiO)₂SiMe₂H,
(CH₂=CH)Me₂SiO(Me₂SiO)₂SiMe₂(CH=CH₂),
HMe₂SiO(MePhSiO)₂SiMe₂H,
(CH₂=CH)Me₂SiO(MePhSiO)₂SiMe₂(CH=CH₂) ,
(CH₂=CHCH₂)Me₂SiO(MePhSiO)₂SiMe₂(CH₂CH=CH₂), and
(CH₂=CHCH₂CH₂CH₂CH₂)Me₂SiO(MePhSiO)₂SiMe₂(CH₂CH₂CH₂CH₂CH=CH₂)

The amount of component (B) added is not particularly limited. However, to obtain the desired degree of polymerization of the organosilicon polymer, it is desirable to control the molar ratio of component (B) to component (A). As the molar ratio is decreased the degree of polymerization increases and a higher molecular weight organosilicon polymer is obtained, and as the molar ratio is increased the degree of polymerization decreases and a lower molecular weight organosilicon polymer is obtained.

Hydrosilylation catalyst (C) promotes an addition reaction between the hydrogen atom in a molecule (A) and the alkenyl group in an other molecule (A), and this catalyst also promotes an addition polymerization to yield our organosilicon polymer with double-ended functionality.

Examples of catalysts for component (C) include platinum catalysts, rhodium catalysts, palladium catalysts and organic peroxides. Of these, the platinum catalysts are preferable, specifically, platinum black, silica powder containing platinum, carbon powder containing platinum, chloroplatinic acid, an alcoholic solution of chloroplatinic acid, a complex of platinum and vinylsiloxane, or a complex of platinum and an olefin.

The amount of component (C) added is normally in a range of 0.1-500 parts by weight of the metal in the catalyst per million parts by weight, based on the total weight of components (A) and (B).

The method of our invention is an addition polymerization of components (A) and (B) in the presence of component (C); however, it is optional to change the order in which components (A)-(C) are added. Examples include (I) the method in which component (B) is gradually added to the mixture of components (A) and (C) while said mixture is heated and agitated; (II) the method in which component (A) is gradually added to the mixture of components (B) and (C) while said mixture is heated and agitated; (III) the method in which component (C) is gradually added to the mixture of components (A) and (B) while said mixture is heated and agitated; and (IV) the method in which the mixture of all the components (A), (B) and (C) are heated and agitated.

Our manufacturing method can use organic solvents to the extent that the objectives of this invention are not lost. When an organic solvent is used, organosilicon polymers with double-ended functionality of higher molecular weight can be manufactured. Specific examples of organic solvents include the aromatic hydrocarbon solvents, like toluene or xylene; the aliphatic hydrocarbon solvents such as hexane, heptane, octane, and nonane; the alicylic hydrocarbon solvents like cyclohexane, cycloheptane, and cycloctane; and the aromatic hydrocarbons containing a fluoride atom such as trifluoromethylbenzene or 1,3-bis(trifluoromethyl)benzene.

The manufacturing conditions of the present invention are not particularly limited. When the addition polymerization is undertaken at normal pressure, the reaction temperature is from the boiling point of component (A) or (B) up to the boiling point of the organic solvent used. When the boiling points of component (A), component (B) and the organic solvent used are relatively low, it is even possible to carry out addition polymerization under pressurization.

The organosilicon polymer with double-ended functionality obtained through our manufacturing method is expressed by the formula

R³R¹ ₂SiO(R¹ ₂ SiO)ₚR¹ ₂Si{R⁴R¹ ₂SiO(R¹ ₂SiO)ₘSiR¹ ₂}ₙ R³

In this formula, R¹ is a C₁₋₁₀ monovalent hydrocarbon group that does not contain aliphatic unsaturated bonds, specific examples of which are mentioned above. R⁴ is a linear or branched C₂₋₁₀ alkylene group illustrated by ethylene, methylethylene, ethylethylene, propylethylene, butylethylene, propylene, butylene, 1-methylpropylene, pentylene, hexenylene, heptenylene, octenylene, nonenylene, and decenylene, where ethylene, propylene, butylene, and hexenylene are preferred. R³ is a hydrogen atom, or C₂₋ ₁₀ alkenyl group. The alkenyl group of R³ is selected from vinyl, allyl, butenyl, pentenyl, hexenyl, heptenyl, octenyl, nonenyl, and decenyl. m is an integer equal to or greater than 0 and represents the degree of polymerization of the diorganosiloxane. n is a positive integer and shows the degree of polymerization of the silethylenesiloxane. p is number equal to or greater than 0. In our method, when m is 0, the organosilicon polymer obtained is a polysilalkylene-siloxane with double-ended functionality; when m is an integer equal to or greater than 1, the organosilicon polymer obtained is a silalkylenesiloxane-diorganosiloxane copolymer with double-ended functionality.

When R³ of component (B) is a C₂₋₁₀ alkenyl group, both ends of the molecular chain of the resulting organosilicon polymer with double-ended functionality are alkenyl groups. When R³ of component (B) is a hydrogen atom, both ends of the molecular chain of the resulting organosilicon polymer are hydrogen atoms.

The organosilicon polymer with double-ended functionality obtained through the manufacturing method of the present invention is a viscous liquid at room temperature and has the technical characteristics of low surface tension and a molecular chain that is not easily broken by ionic materials such as acids and alkalis. These characteristics are best put to practical use as base oils for lubricants, defoaming agents or greases. The organosilicon polymer can also be utilized as a base polymer in organic-peroxide cured silicone rubber compositions, addition-reaction cured silicone rubber compositions, and condensation-reaction cured silicone rubber compositions.

Furthermore, the organosilicon polymer with a silicon-hydrogen group at both ends of its molecular chain can be readily converted to another kind of organosilicon polymer by allowing it to react in an addition reaction with an alkene containing an organic functional group. By commonly known methods, it is possible to make organosilicon polymers containing a hydroxyl group at both ends of the molecular chain by hydrolysis of these organosilicon polymers having silicon-bonded hydrogen atoms at both ends. The organosilicon polymer containing an alkenyl group at both ends of the molecular chain is used to make an organosilicon polymer containing an organic functional group at both ends of the molecular chain by reacting it with a silane containing a silicon-bonded hydrogen atom and the desired organic functional group by an addition reaction.

The inventive method of manufacturing the organosilicon polymers of the present invention is illustrated by the following examples. In these examples, the viscosity shown is that viscosity measured at 25°C, and Me represents methyl.

### EXAMPLE 1

A toluene solution was prepared by introducing into a reaction vessel, 60 g of toluene, 1.86 g of 1,3-divinyltetramethyldisiloxane, and a solution of a complex of divinyltetramethyldisiloxane and chloroplatinic acid containing 1 g of carbon powder containing 0.5% platinum. This solution was heated to 90°C with uniform agitation. Then, 144 g of 1,1,3,3-tetramethyl-1-vinyldisiloxane were slowly added dropwise. After the dropwise addition was complete, the mixture was heated for 2 hours at 112°C in a circulating air current. Following cold filtration, the toluene was extracted from the toluene solution, and a sticky liquid was obtained. Immediately after extraction, this sticky liquid was analyzed by ²⁹Si and ¹³C nuclear magnetic resonance spectral analysis (hereinafter, NMR) which determined it to be a polysilethylenedimethylsiloxane as expressed in the following formula:

(CH₂=CH)Me₂SiO(Me₂SiC₂H₄Me₂SiO)ₓSiMe₂(CH=CH₂)

where x had an average value of greater than 1 based on the weight-average molecular weight as determined by gel permeation chromatography (hereinafter, GPC).

**Figure 1** is a Fourier-transform infrared absorption spectrum of our organosilicon polymer manufactured in Example 1.

**Figure 2** is a ²⁹Si NMR spectrum of the same organosilicon polymer.

**Figure 3** is a ¹³C NMR spectrum of the same organosilicon polymer.

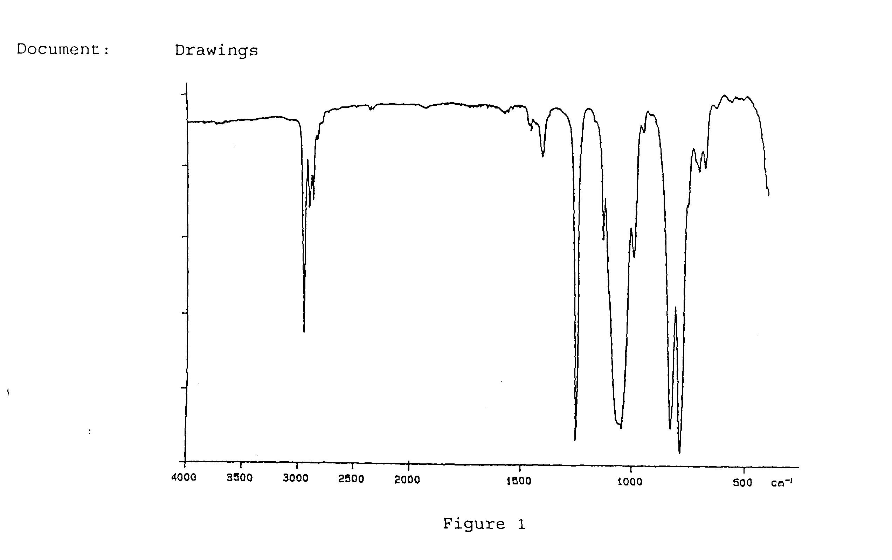

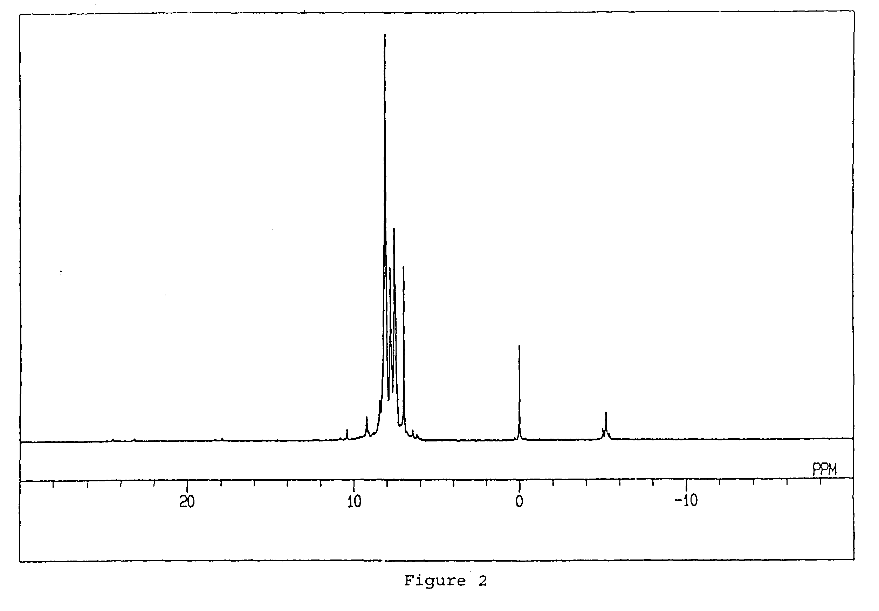

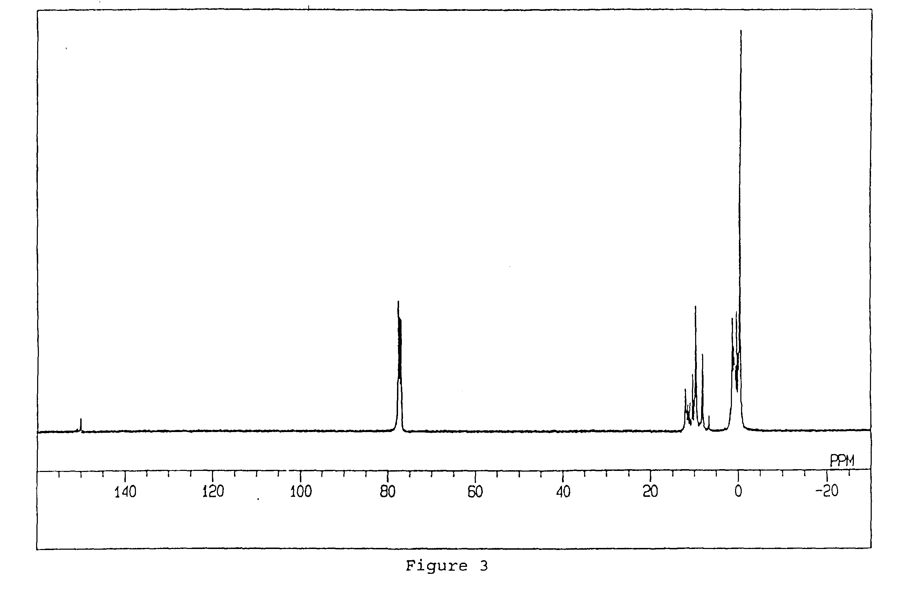

Figures 1, 2, and 3 were the results of analysts by Fourier-transform infrared absorption spectrum, ²⁹Si NMR, and ¹³C NMR to identify the organosilicon polymer made herein.

This polysilethylenedimethysiloxane was immediately analyzed by GPC. The weight-average molecular weight calculated by using polydimethylsiloxane was 5,000. The yield of polysilethylenesiloxane from this peak area was 84%.

### EXAMPLE 2

A toluene solution was prepared by introducing into a reaction vessel, 60 g of toluene, 1.34 g of 1,1,3,3-tetramethyldisiloxane and chloroplatinic acid in 50% isopropanol in which the platinum metal content was 60 ppm. This solution was heated to 60°C with uniform agitation. Then, 128 g of 1,1,3,3-tetramethyl-1-vinyldisiloxane were slowly added dropwise. After dropwise addition was complete, the mixture was heated for 2 hours at 112°C in a circulating air current. Following cold filtration, the toluene was extracted from the toluene solution and a sticky liquid was obtained. Immediately after extraction, this sticky liquid was analyzed by ²⁹Si and ¹³C NMR, and was ascertained to be a polysilethylenedimethylsiloxane as expressed in the following formula:

HMe₂SiO(Me₂SiC₂H₄Me₂SiO)ₓSiMe₂H

where x had an average value of greater than 1 based on the weight-average molecular weight as determined by GPC.

This polysilethylenedimethylsiloxane was immediately analyzed by GPC, and the weight-average molecular weight caluculated by using polydimethylsiloxane was 15,000. The yield of polysilethylenedimethylsiloxane from this peak area was 94%.

### EXAMPLE 3

A toluene solution was prepared by introducing into a reaction vessel, 60 g of toluene, 2.14 g of 1,3-diallyltetramethyldisiloxane, and a solution of a complex of divinyltetramethyldisiloxane and chloroplatinic acid containing 1 g carbon powder containing 0.5% platinum. This solution was heated to 90°C with uniform agitation. Then, 122 g of 1,1,3,3-tetramethyl-1-allyldisiloxane were slowly added dropwise. After dropwise addition was complete, it was heated for 2 hours at 112°C in a circulating current. Following cold filtration, the solvent was extracted from the toluene solution, and a sticky liquid was obtained. Immediately after extraction, this sticky liquid was analyzed by ²⁹Si and ¹³C NMR, and was ascertained to be a polysilpropylenedimethylsiloxane as expressed in the following formula:

(CH₂=CHCH₂)Me₂SiO(Me₂SiC₃H₆Me₂SiO)ₓSiMe₂(CH₂CH=CH₂)

where x had an average value of greater than 1 based on the weight-average molecular weight as determined by GPC.

This polysilpropylenedimethysiloxane was immediately analyzed by GPC, and the weight-average molecular weight calculated by using polydimethylsiloxane was 9,000. The yield of polysilpropylenedimethylsiloxane from this peak area was 93%.

## Claims

1. A method for manufacturing an organosilicon polymer with double-ended functionality expressed by the general formula:
R³R¹ ₂SiO(R¹ ₂SiO)ₚR¹ ₂Si{R⁴R¹ ₂SiO(R¹ ₂SiO)ₘSiR¹ ₂}ₙ R³
wherein R¹ is a C₁₋₁₀ monovalent hydrocarbon group that does not contain an aliphatic unsaturated bond, R⁴ is a C₂₋₁₀ alkylene group, R³ in the same molecule is either a hydrogen atom or a C₂₋₁₀ alkenyl group, p is an integer equal to or greater than 0, m is an integer equal to or greater than 0, and n is a positive integer, comprising polymerizing by addition reaction
(A) a diorganosiloxane expressed by the general formula
R²R¹ ₂SiO(R¹ ₂SiO)ₘSiR¹ ₂H
wherein R¹ is a C₁₋₁₀ monovalent hydrocarbon group that does not contain any aliphatic unsaturated bonds, R² is a C₂₋₁₀ alkenyl group, and m is an integer equal to or greater than 0, and
(B) a diorganosiloxane expressed by the general formula
R³R¹ ₂SiO(R¹ ₂SiO)ₚSiR¹ ₂R³
wherein R¹ is a C₁₋₁₀ monovalent hydrocarbon group that does not contain any aliphatic unsaturated bonds, R³ in the same molecule is either a hydrogen atom or a C₂₋₁₀ alkenyl group, and p is an integer equal to or greater than 0, in the presence of
(C) a hydrosilylation catalyst.

2. The method according to claims 1 or 2 in which m has an average value of from 0 to 10.

3. The method according to claims 1 or 2 in which R¹ is methyl or phenyl, R² is vinyl or allyl, R³ is hydrogen atom.

4. The method according to claims 1 or 2 in which R¹ is methyl or phenyl, R² is vinyl or allyl, R³ is vinyl.

5. The method according to claims 1 or 2 in which R¹ is methyl or phenyl, R² is vinyl or allyl, R³ is allyl.

6. The method according to claims 1 or 2 in which the hydrosilylation catalyst (C) is a platinum catalyst.

## Patentansprüche

1. Verfahren zur Herstellung eines Organosiliciumpolymers mit Funktionalität an beiden Enden, das durch die allgemeine Formel:
R³R¹ ₂SiO(R¹ ₂SiO)ₚR¹ ₂Si{R⁴R¹ ₂SiO(R¹ ₂SiO)ₘSiR¹ ₂}ₙR³
ausgedrückt ist, worin R¹ eine einbindige C₁- bis C₁₀-Kohlenwasserstoffgruppe ist, die keine aliphatisch ungesättigten Bindungen enthält, R⁴ eine C₂- bis C₁₀-Alkylengruppe ist, R³ im selben Molekül entweder ein Wasserstoffatom oder eine C₂- bis C₁₀-Alkenylgruppe ist, p eine ganze Zahl größer oder gleich 0 ist, m eine ganze Zahl größer oder gleich 0 ist und n eine positive ganze Zahl ist, umfassend eine Polymerisation durch Additionsreaktion von:
(A) einem Diorganosiloxan, das durch die allgemeine Formel:
R²R¹ ₂SiO(R¹ ₂SiO)ₘSiR¹ ₂H
ausgedrückt ist, worin R¹ eine einbindige C₁- bis C₁₀-Kohlenwasserstoffgruppe ist, die keine aliphatisch ungesättigten Bindungen enthält, R² eine C₂- bis C₁₀-Alkenylgruppe ist und m eine ganze Zahl größer oder gleich 0 ist, und
(B) einem Diorganosiloxan, das durch die allgemeine Formel:
R³R¹ ₂SiO(R¹ ₂SiO)ₚSiR¹ ₂R³
ausgedrückt ist, worin R¹ eine einbindige C₁- bis C₁₀-Kohlenwasserstoffgruppe ist, die keine aliphatisch ungesättigten Bindungen enthält, R³ im selben Molekül entweder ein Wasserstoffatom oder eine C₂- bis C₁₀-Alkenylgruppe ist und p eine ganze Zahl größer oder gleich 0 ist, in Gegenwart von
(C) einem Hydrosilylierungskatalysator.

2. Verfahren nach Anspruch 1 oder 2, in dem m einen Mittelwert von 0 bis 10 aufweist.

3. Verfahren nach Anspruch 1 oder 2, in dem R¹ Methyl oder Phenyl ist, R² Vinyl oder Allyl ist, R³ ein Wasserstoffatom ist.

4. Verfahren nach Anspruch 1 oder 2, in dem R¹ Methyl oder Phenyl ist, R² Vinyl oder Allyl ist, R³ Vinyl ist.

5. Verfahren nach Anspruch 1 oder 2, in dem R¹ Methyl oder Phenyl ist, R² Vinyl oder Allyl ist, R³ Allyl ist.

6. Verfahren nach Anspruch 1 oder 2, in dem der Hydrosilylierungskatalysator (C) ein Platinkatalysator ist.

## Revendications

1. Procédé pour fabriquer un polymère organosilicié ayant une fonctionnalité sur les deux extrémités, représenté par la formule générale :
R³R¹ ₂SiO(R¹ ₂SiO)ₚR¹ ₂Si{R⁴R¹ ₂SiO(R¹ ₂SiO)ₘSiR¹ ₂}ₙR³
dans laquelle R¹ est un groupe hydrocarboné monovalent en C₁ à C₁₀ qui ne contient pas de liaison aliphatique insaturée, R⁴ est un groupe alkylène en C₂ à C₁₀, R³ dans la même molécule est soit un atome d'hydrogène soit un groupe alcényle en C₂ à C₁₀, p est un entier égal ou supérieur à 0, m est un entier égal ou supérieur à 0 et n est un entier positif, comprenant la polymérisation, par réaction d'addition,
(A) d'un diorganosiloxane représenté par la formule générale
R²R¹ ₂SiO(R¹ ₂SiO)ₘSiR¹ ₂H
dans laquelle R¹ est un groupe hydrocarboné monovalent en C₁ à C₁₀ qui ne contient pas de liaisons aliphatiques insaturées, R² est un groupe alcényle en C₂ à C₁₀ et m est un entier égal ou supérieur à 0, et
(B) d'un diorganosiloxane représenté par la formule générale
R³R¹ ₂SiO(R¹ ₂SiO)ₚSiR¹ ₂R³
dans laquelle R¹ est un groupe hydrocarboné monovalent en C₁ à C₁₀ qui ne contient pas de liaisons aliphatiques insaturées, R³ dans la même molécule est soit un atome d'hydrogène soit un groupe alcényle en C₂ à C₁₀ et p est un entier égal ou supérieur à 0, en présence de
(C) un catalyseur d'hydrosilylation.

2. Procédé selon les revendications 1 ou 2, dans lequel m a une valeur moyenne de 0 à 10.

3. Procédé selon les revendications 1 ou 2, dans lequel R¹ est un groupe méthyle ou phényle, R² est un groupe vinyle ou allyle, R³ est un atome d'hydrogène.

4. Procédé selon les revendications 1 ou 2, dans lequel R¹ est un groupe méthyle ou phényle, R² est un groupe vinyle ou allyle, R³ est un groupe vinyle.

5. Procédé selon les revendications 1 ou 2, dans lequel R¹ est un groupe méthyle ou phényle, R² est un groupe vinyle ou allyle, R³ est un groupe allyle.

6. Procédé selon les revendications 1 ou 2, dans lequel le catalyseur d'hydrosilylation (C) est un catalyseur au platine.
